# EUROPÄISCHE PATENTANMELDUNG

(11) **EP 3 484 097 A1**
(43) Veröffentlichungstag der Anmeldung: **15.05.2019**
(21) Anmeldenummer: 17200512.6
(22) Anmeldetag: 08.11.2017
(51) Int. Cl.: H04L 9/32, G06F 21/33, H04L 29/06

(54) **VERFAHREN UND VALIDIERUNGSEINRICHTUNG ZUM VALIDIEREN EINES DIGITALEN ZERTIFIKATS**

(71) Anmelder: Siemens Aktiengesellschaft, 80333 München (DE)
(72) Erfinder: Munzert, Michael, 82166 Gräfelfing (DE); von Oheimb, David, 85551 Heimstetten (DE)

(57) **Zusammenfassung**

Verfahren zum Validieren eines vorbestimmten digitalen Zertifikats (10) mit einer Validierungseinrichtung (4), wobei die Validierungseinrichtung (4) eine Zulassungsinformation (7) speichert, die angibt, welche digitalen Zertifikate aus einer Vielzahl von digitalen Zertifikaten (10) zulässige digitale Zertifikate sind, und wobei die Validierungseinrichtung (4) ferner eine Vertrauensinformation (8) speichert, welche ein Vertrauensniveau der zugelassenen digitalen Zertifikate (10) angibt, umfassend:
Ermitteln (S1), unter Berücksichtigung der Zulassungsinformation (7), ob das vorbestimmte digitale Zertifikat (10) unter den aktuellen Bedingungen für die geplante Benutzung zulässig ist; und
falls ermittelt wird, dass das vorbestimmte digitale Zertifikat (10) zulässig ist, Ermitteln (S3) des Vertrauensniveaus des vorbestimmten digitalen Zertifikats (10) unter Berücksichtigung der Vertrauensinformation (8) und den aktuellen Bedingungen für die geplante Benutzung.
Es kann ein Vertrauensniveau für ein digitales Zertifikat bestimmt werden, welches angibt, wie vertrauenswürdig das digitale Zertifikat unter den aktuellen Bedingungen für eine geplante Benutzung ist.

## Beschreibung

Die vorliegende Erfindung betrifft ein Verfahren zum Validieren eines vorbestimmten digitalen Zertifikats sowie eine Validierungseinrichtung zum Validieren des vorbestimmten digitalen Zertifikats.

Ein digitales Zertifikat kann einem Zertifikatsinhaber, zum Beispiel einer Maschine, einem Feldgerät oder einem Steuergerät, zugeordnet sein. Das digitale Zertifikat des Zertifikatsinhabers wird beispielsweise zum Verschlüsseln von Daten, die von einer weiteren Einrichtung (Nutzereinrichtung) an den Zertifikatsinhaber gesendet werden, oder zum Verifizieren von digitalen Signaturen des Zertifikatsinhabers durch eine weitere Einrichtung (Nutzereinrichtung) eingesetzt. Bevor es durch die Nutzereinrichtung benutzt wird, ist es häufig notwendig, das digitale Zertifikat des Zertifikatsinhabers zu validieren.

Hierzu kann die Nutzereinrichtung einen Truststore abrufen. Der Truststore gibt insbesondere an, welche Zertifizierungsstellen, insbesondere Wurzelzertifizierungsstellen, aus Sicht der Nutzereinrichtung zulässige bzw. vertrauenswürdige digitale Zertifikate ausstellen oder indirekt die Ausstellung durch Zwischen-Zertifizierungsstellen beglaubigen. Falls das zu validierende digitale Zertifikat durch eine Zertifizierungsstelle erstellt wurde, die gemäß dem Truststore direkt oder indirekt vertrauenswürdige Zertifikate erstellt, kann das digitale Zertifikat validiert werden.

Vor diesem Hintergrund besteht eine Aufgabe der vorliegenden Erfindung darin, ein verbessertes Validieren eines vorbestimmten digitalen Zertifikats zu schaffen.

Gemäß einem ersten Aspekt wird ein Verfahren zum Validieren eines vorbestimmten digitalen Zertifikats mit einer Validierungseinrichtung vorgeschlagen. Die Validierungseinrichtung speichert eine Zulassungsinformation, die angibt, welche digitalen Zertifikate aus einer Vielzahl von digitalen Zertifikaten zulässige digitale Zertifikate sind. Ferner speichert die Validierungseinrichtung eine Vertrauensinformation, welche ein Vertrauensniveau der zugelassenen digitalen Zertifikate angibt. Das Verfahren umfasst:
Ermitteln, unter Berücksichtigung der Zulassungsinformation, ob das vorbestimmte digitale Zertifikat zulässig ist; und
falls ermittelt wird, dass das vorbestimmte digitale Zertifikat zulässig ist, Ermitteln des Vertrauensniveaus des vorbestimmten digitalen Zertifikats unter Berücksichtigung der Vertrauensinformation, insbesondere für eine bestimmte Benutzung.

Die Validierungseinrichtung kann als eine Speichereinrichtung ausgebildet sein. Sie kann auf einem Rechner, insbesondere als Teil eines industriellen Netzwerks, ausgeführt sein. Die Validierungseinrichtung speichert z.B. die Zulassungsinformation und die Vertrauensinformation.

Unter einem Validieren eines digitalen Zertifikats wird insbesondere verstanden, dass das digitale Zertifikat verifiziert wird, und dass bestätigt wird, dass das Zertifikat für eine bestimmte Benutzung vertrauenswürdig genug ist.

Die Zulassungsinformation ist insbesondere eine Information, die für zumindest ein digitales Zertifikat angibt, ob dieses Zertifikat allgemein zulässig ist, z.B. im Hinblick auf die ausstellende Zertifizierungsstelle oder auf einen Gültigkeitszeitraum des Zertifikats. Die Zulassungsinformation kann beispielsweise angeben, welche Zertifizierungsstellen aus Sicht der Nutzereinrichtung zulässige Zertifikate erstellen. Jedes digitale Zertifikat enthält eine Identifikation der Zertifizierungsstelle, die das digitale Zertifikat erstellt hat. Unter Berücksichtigung der Information über die Zertifizierungsstelle eines digitalen Zertifikats kann dann insbesondere abgeleitet werden, ob dieses digitale Zertifikat zulässig ist oder nicht.

Die Zulässigkeit eines digitales Zertifikats ist insbesondere eine binäre Information: entweder, das digitale Zertifikat ist zulässig, oder es ist es nicht.

Die Vertrauensinformation gibt insbesondere ein Vertrauensniveau für zugelassene digitale Zertifikate an. Das Vertrauensniveau eines digitalen Zertifikats kann angeben, wie vertrauenswürdig das digitale Zertifikat ist. Zum Beispiel umfasst die Vertrauensinformation mehrere Vertrauensniveaus. Insbesondere können die zugelassenen digitalen Zertifikate anhand der Vertrauensinformation in mehrere Vertrauensniveaus oder Vertrauenskategorien eingeteilt werden. Es kann beispielsweise zwischen drei Vertrauensniveaus unterschieden werden, welche jeweils eine niedrige, eine mittlere und eine hohe Vertrauenswürdigkeit eines bestimmten zugelassenen digitalen Zertifikats angeben.

Das vorbestimmte digitale Zertifikat ist insbesondere ein zu validierendes digitales Zertifikat. Im Folgenden wird das digitale Zertifikat auch nur als "Zertifikat" bezeichnet. Das Zertifikat kann ein Public-Key-Zertifikat nach dem Standard X.509 sein, welches einen öffentlichen Schlüssel umfasst. Bei dem Zertifikat kann es sich auch um ein Attributzertifikat handeln.

Das Zertifikat kann von einer Einrichtung, der das Zertifikat zugeordnet ist, durch eine Nutzereinrichtung empfangen werden. Die Nutzereinrichtung möchte insbesondere das empfangene Zertifikat verifizieren und validieren, um das validierte Zertifikat sicher zu nutzen, zum Beispiel um von der Einrichtung empfangene digitale Signaturen zu überprüfen und/oder um Daten für die Einrichtung mit dem in dem Zertifikat abgelegten öffentlichen Schlüssel zu verschlüsseln.

Die Nutzereinrichtung kann die Validierungseinrichtung abrufen, um das Zertifikat zu validieren. Es ist auch möglich, dass die Nutzereinrichtung die Validierungseinrichtung mit der Validierung beauftragt. Die Validierungseinrichtung kann auch Teil der Nutzereinrichtung sein.

Die Zulassungsinformation ermöglicht insbesondere zu bestimmen, ob das zu verifizierende Zertifikat zulässig ist. Mit der Zulassungsinformation kann z.B. bestimmt werden, ob ein Zertifikat grundsätzlich unzulässig ist. Dieses ist zum Beispiel der Fall, wenn das Zertifikat durch eine Zertifizierungsstelle erstellt wurde, die nicht vertrauenswürdig ist, oder falls die Gültigkeitsdauer des Zertifikats bereits abgelaufen ist. Die Zulassungsinformation ermöglicht somit insbesondere eine Vorbestimmung zur Zulässigkeit des Zertifikats.

Falls anhand der Zulassungsinformation bestimmt wird, dass das Zertifikat zulässig ist, kann mit Hilfe der Vertrauensinformation zum Beispiel eine detailliertere Information über das Zertifikat erhalten werden. Mit der Vertrauensinformation wird dem Zertifikat insbesondere ein Vertrauensniveau zugeordnet, welches angibt, wie vertrauenswürdig das Zertifikat für eine oder mehrere Arten der Benutzung ist.

In Ausführungsformen sind die Zulassungsinformation und die Vertrauensinformation zusammen gespeichert. Zum Beispiel können die Zulassungsinformation und die Vertrauensinformation zusammen einen oder mehrere Truststores ausbilden, die angeben, welche Zertifikate wie vertrauenswürdig sind. Die durch die Zulassungsinformation und die Vertrauensinformation gebildeten Truststores geben insbesondere nicht nur an, ob ein Zertifikat zulässig ist oder nicht, sondern ferner, anhand des Vertrauensniveaus, wie zuverlässig bzw. vertrauenswürdig das Zertifikat für bestimmte Arten der Benutzung ist.

Es kann insbesondere mehr Information über die Vertrauenswürdigkeit von digitalen Zertifikaten erhalten werden, weil die Validierungseinrichtung eine Vertrauensinformation zur Angabe des Vertrauensniveaus des Zertifikats umfasst. Die Validierungseinrichtung kann insbesondere mit dem ermittelten Vertrauensniveau eine allgemeine Aussage über die Vertrauenswürdigkeit des Zertifikats treffen.

Beispielsweise kann erkannt werden, inwieweit einem Zertifikat vertraut werden kann. Durch die Kenntnis des Vertrauensniveaus kann z.B. ein besseres Verständnis für das Zertifikat gewonnen werden, und es kann insbesondere unter Berücksichtigung des Vertrauensniveaus richtig bestimmt werden, ob ein Zertifikat validiert werden soll oder nicht. Das Validieren des Zertifikats ist insbesondere zuverlässiger und feingranularer, wodurch die gesamte Sicherheit und/oder Flexibilität der Nutzereinrichtung erhöht werden kann.

Gemäß einer Ausführungsform umfasst das Verfahren ferner:
falls ermittelt wird, dass das Vertrauensniveau des vorbestimmten digitalen Zertifikats auf oder über einem vorbestimmten Vertrauensniveau (für die geplante Nutzungsart) liegt, Validieren des vorbestimmten digitalen Zertifikats. Das Validieren ist insbesondere ein erfolgreiches Validieren.

Das vorbestimmte Vertrauensniveau kann durch die Nutzereinrichtung vorgegeben sein. Das vorbestimmte Vertrauensniveau ist insbesondere ein minimales Vertrauensniveau, für welches die Zuverlässigkeit des Zertifikats für die Validierung des Zertifikats für eine geplante Nutzungsart als ausreichend betrachtet wird. Das Validieren kann z.B. durch die Validierungseinrichtung oder durch die Nutzereinrichtung erfolgen.

In Ausführungsformen umfasst das Verfahren ferner ein Ablehnen des Zertifikats, falls ermittelt wird, dass das Vertrauensniveau des vorbestimmten digitalen Zertifikats unter dem für die geplante Nutzungsart vorbestimmten Vertrauensniveau liegt. In diesem Fall wird das Zertifikat nicht validiert und anschließend auch nicht durch die Nutzereinrichtung genutzt. Gemäß einer weiteren Ausführungsform umfasst das Verfahren ferner:
Benutzen des validierten digitalen Zertifikats zum Verifizieren von Daten, die von einer vorbestimmten Einrichtung empfangen werden, zum Verschlüsseln von Daten, die an die vorbestimmte Einrichtung (dem Zertifikatsinhaber) übertragen werden, und/oder zum Überprüfen einer digitalen Signatur der vorbestimmten Einrichtung.

In Ausführungsformen wird das digitale Zertifikat nur benutzt, falls es erfolgreich validiert worden ist. Insbesondere wird das digitale Zertifikat durch die Nutzereinrichtung genutzt. Die Daten können mit dem öffentlichen Schlüssel des validierten Zertifikats verifiziert und/oder verschlüsselt werden. Die vorbestimmte Einrichtung kann die Einrichtung sein, der das Zertifikat zugeordnet ist.

Gemäß einer weiteren Ausführungsform speichert die Validierungseinrichtung für unterschiedliche Benutzungen eines digitalen Zertifikats unterschiedliche Zulassungsinformationen und/oder unterschiedliche Vertrauensinformationen.

Unter einer Benutzung des Zertifikats kann auch eine Anwendung des Zertifikats verstanden werden. Die unterschiedlichen Benutzungen geben insbesondere an, wie das validierte Zertifikat eingesetzt werden soll. Zum Beispiel können die unterschiedlichen Benutzungen unterschiedliche Benutzungsumgebungen, unterschiedliche Anwendungsarten, unterschiedliche das Zertifikat nutzende Einrichtungen, und dergleichen angeben.

Für die unterschiedlichen Benutzungen können in der Validierungseinrichtung unterschiedliche Zulassungsinformationen und/oder unterschiedliche Vertrauensinformationen gespeichert sein. Dadurch kann insbesondere ein noch präziseres und flexibler nutzbares Vertrauensniveau für das Zertifikat erhalten werden, weil das Vertrauensniveau von der Benutzung des Zertifikats abhängig sein kann.

Gemäß einer weiteren Ausführungsform umfasst das Verfahren ferner:
Bereitstellen einer Benutzungsinformation, die eine geplante Benutzung des vorbestimmten digitalen Zertifikats angibt, an die Validierungseinrichtung;
Ermitteln, unter Berücksichtigung der für die Benutzungsinformation zutreffende Zulassungsinformation, ob das vorbestimmte digitale Zertifikat zulässig ist;
falls ermittelt wird, dass das vorbestimmte digitale Zertifikat zulässig ist, Ermitteln des Vertrauensniveaus des vorbestimmten digitalen Zertifikats unter Berücksichtigung der Benutzungsinformation.

Die Benutzungsinformation kann insbesondere angeben, wie das validierte Zertifikat eingesetzt werden soll, z.B. in welcher Umgebung. Die Umgebung ist beispielsweise eine sichere Umgebung, wie eine Steuereinrichtung eines Industrienetzwerks. Die Umgebung kann auch eine weniger sichere Umgebung, wie z.B. eine ausgelagerte Produktionsstätte, sein.

Die Benutzungsinformation kann auch das vorbestimme Vertrauensniveau vorgeben, also das Vertrauensniveau, das für die geplante Benutzung akzeptabel wäre. Auch weitere benutzungsbezogene Informationen können Teil der Benutzungsinformation sein. Die Benutzungsinformation kann der Validierungseinrichtung durch die Nutzereinrichtung bereitgestellt werden.

Die Benutzungsinformation ermöglicht der Validierungseinrichtung insbesondere, diejenige Zulassungsinformation und gegebenenfalls diejenige Vertrauensinformation, die für die geplante Benutzung zutreffend ist, auszuwählen. Je nach geplanter Benutzung des Zertifikats können unterschiedliche Zulassungsinformationen und Vertrauensinformationen abgerufen und/oder benutzt werden.

Das Vertrauensniveau des Zertifikats wird insbesondere von der geplanten Benutzung abhängig ermittelt. Je nachdem, welche Benutzung für das Zertifikat geplant ist, kann diese zugelassen werden oder nicht, und auch unterschiedliche Vertrauensniveaus haben. Dasselbe Zertifikat wird nicht zwangsläufig immer validiert oder nicht validiert. Stattdessen hängt das Validieren des Zertifikats von der geplanten Benutzung ab.

Falls die Benutzungsinformation zum Beispiel angibt, dass das Zertifikat in einer wenig sicheren Produktionsstätte eingesetzt werden soll, kann bestimmt werden, dass das Zertifikat ein ausreichendes Vertrauensniveau hat und validiert werden. Soll dasselbe Zertifikat allerdings in einer sicheren Steuereinrichtungsumgebung eingesetzt werden, kann bestimmt werden, dass das Zertifikat für die geplante Benutzung kein ausreichendes Vertrauensniveau hat. Für unterschiedliche Anwendungen/Benutzungen eines einzigen Zertifikats können unterschiedliche Vertrauensniveaus bestimmt werden. Dadurch kann z.B. die Sicherheit der Umgebung, in der Zertifikat benutzt werden soll, gewährleistet werden.

Die Validierungseinrichtung gibt insbesondere nicht nur ein allgemeines Vertrauensniveau für das Zertifikat, sondern ferner ein benutzungsspezifisches Vertrauensniveau. Dadurch, dass das Vertrauensniveau benutzungsspezifisch bestimmt werden kann, ist das Validieren des Zertifikats besonders flexibel.

Gemäß einer weiteren Ausführungsform umfasst das Verfahren ferner:
Abfragen der Benutzungsinformation durch die Validierungseinrichtung.

Die Validierungsinformation kann beim Empfangen einer Anfrage zur Zulässigkeit und/oder zum Vertrauensniveau des Zertifikats weitere Informationen über das Zertifikat benötigen. In diesem Fall kann die Validierungseinrichtung zum Beispiel die Nutzereinrichtung nach der Benutzungsinformation des Zertifikats fragen.

Gemäß einer weiteren Ausführungsform umfasst das Verfahren ferner:
Bereitstellen des ermittelten Vertrauensniveaus des vorbestimmten digitalen Zertifikats an eine beantragende Einrichtung, die das Validieren des digitalen Zertifikats beantragt, und/oder an einen Nutzer.

Die beantragende Einrichtung ist insbesondere die Nutzereinrichtung. Das Vertrauensniveau kann der beantragenden Einrichtung und/oder dem Nutzer bereitgestellt werden, damit diese entscheiden können, ob das Vertrauensniveau ausreichend ist, um das Zertifikat erfolgreich zu validieren. Die Nutzereinrichtung kann z.B. das Zertifikat automatisch erfolgreich validieren, falls das empfangene Vertrauensniveau höher als das vorbestimmte Vertrauensniveau liegt.

Gemäß einer weiteren Ausführungsform umfasst das Verfahren ferner:
Erzeugen einer Zertifikatskette mit mehreren vorbestimmten Zertifikaten;
Ermitteln, ob das Vertrauensniveau der jeweiligen vorbestimmten digitalen Zertifikate auf oder über dem vorbestimmten Vertrauensniveau liegt; und
Validieren der gesamten Zertifikatskette, falls ermittelt wird, dass das Vertrauensniveau der jeweiligen vorbestimmten digitalen Zertifikate auf oder über dem vorbestimmten Vertrauensniveau liegt.

Die Zertifikatskette ist insbesondere eine Liste von mehreren miteinander verknüpften digitalen Zertifikaten. Die Zertifikatskette umfasst insbesondere ein Wurzelzertifikat, das von einer Wurzelzertifizierungsstelle erstellt wurde, die gemäß den Informationen im Truststore in gewisser Weise als vertrauenswürdig gilt, sowie mehrere Zwischenzertifikate, die von Zwischenzertifizierungsstellen erstellt wurden. Abgesehen von dem Wurzelzertifikat kann jedes der Zertifikate der Zertifikatskette auf das vorherige Zertifikat der Zertifikatskette zurückweisen.

Unterschiedliche Zertifikate der Zertifikatskette können unterschiedliche Vertrauenswürdigkeiten und somit unterschiedliche Vertrauensniveaus haben. Falls alle Zertifikate einer Zertifikatskette validiert werden sollen, kann die Nutzereinrichtung der Validierungseinrichtung Information über den Aufbau der Zertifikatkette bereitstellen. Diese Information ist z.B. Teil der Benutzungsinformation.

Zum Validieren der Zertifikatskette wird insbesondere jedes einzelne Zertifikat der Zertifikatskette überprüft. Beispielsweise wird zunächst überprüft, ob das Wurzelzertifikat im Hinblick auf die im Truststore hinterlegten Wurzelzertifizierungsstellen und Zulassungsinformationen zulässig ist. Falls bestimmt wird, dass das Wurzelzertifikat zulässig ist und ein ausreichendes Vertrauensniveau aufweist, können nacheinander alle Zertifikate der Zertifikatskette überprüft werden. Beim Überprüfen der jeweiligen Zertifikate der Zertifikatskette kann überprüft werden, ob ein jeweiliges Zertifikat unter Berücksichtigung der Zulassungsinformation zulässig ist und ob es unter Berücksichtigung der Vertrauensinformation ein ausreichendes Vertrauensniveau hat.

Falls ein Gesamt-Vertrauensniveau, das sich aus den Vertrauensniveaus aller Zertifikate in der Kette ergibt, also beispielsweise alle Zertifikate der Zertifikatskette als zulässig bestimmt werden und ein ausreichendes Mindest-Vertrauensniveau haben, wird insbesondere die gesamte Zertifikatskette als zulässig bestimmt und alle Zertifikate der Zertifikatskette werden erfolgreich validiert.

Die Zertifikatskette wird insbesondere nur erfolgreich validiert, falls alle Zertifikate der Zertifikatskette ein ausreichendes Vertrauensniveau haben. Dadurch, dass für jedes der Zertifikate der Zertifikatskette ein einzelnes Vertrauensniveau bestimmt wird, kann eine bessere Einschätzung der Vertrauenswürdigkeit der Zertifikatskette erfolgen, wodurch auch die Sicherheit des Systems, in dem die Zertifikatskette verwendet werden soll, gewährleistet werden kann.

Gemäß einer weiteren Ausführungsform umfasst das Verfahren ferner:
Ändern der Zulassungsinformation und/oder der Vertrauensinformation.

Das Ändern der Zulassungsinformation und/oder der Vertrauensinformation kann auch als ein Aktualisieren der Zulassungsinformation und/oder der Vertrauensinformation betrachtet werden. Die Zulassungsinformation und/oder Vertrauensinformation kann z.B. geändert werden, wenn diese veraltet ist.

Die Zulassungsinformation und/oder die Vertrauensinformation kann auch dynamisch geändert werden. In Ausführungsformen ist die Zulassungsinformation und/oder die Vertrauensinformation nicht statisch in der Validierungseinrichtung gespeichert. Stattdessen kann die Zulassungsinformation und/oder die Vertrauensinformation dynamisch erzeugt werden. Dadurch, dass die Zulassungsinformation und/oder die Vertrauensinformation geändert wird, kann das Vertrauensniveau mit einer höheren Präzision bestimmt werden. Das Validieren des Zertifikats kann somit besonders flexibel erfolgen.

Gemäß einer weiteren Ausführungsform erfolgt das Ändern der Zulassungsinformation und/oder der Vertrauensinformation in Abhängigkeit von einer aktuellen Anwendungssituation, einer Information über die beantragende Einrichtung, einer Information über einen Zertifikatsinhaber und/oder einer Information zu einem Benutzungskontext.

Das Ändern und/oder dynamische Erzeugen der Zulassungsinformation und/oder der Vertrauensinformation kann unter Berücksichtigung von aktuellen Präferenzen erfolgen. Zum Beispiel kann die Zulassungsinformation und/oder Vertrauensinformation im Hinblick auf einen Nutzer der Nutzereinrichtung geändert werden. Es ist auch möglich, die Zulassungsinformation und/oder die Vertrauensinformation zu ändern, wenn sich die Nutzereinrichtung und/oder die Einrichtung des Zertifikatsinhabers in einem bestimmten Land befindet. Beispielsweise wird eine Zertifizierungsstelle anhand der Zulassungsinformation nur dann als zulässig eingestuft, wenn sich die Einrichtung des Zertifikatsinhabers aktuell in dem gleichen Land wie die Nutzereinrichtung befindet, und wenn das Zertifikat für das Land zugelassen ist.

Dadurch, dass die Zulassungsinformation und/oder die Vertrauensinformation in Abhängigkeit von aktuellen Präferenzen geändert werden kann, kann das Bestimmen des Vertrauensniveaus präziser sein und die Sicherheit des Systems, das das Zertifikat nutzen möchte, kann erhöht werden. Das Validieren des Zertifikats kann zudem besonders flexibel erfolgen.

Gemäß einer weiteren Ausführungsform umfasst das Verfahren ferner:
Deaktivieren eines Teils der Zulassungsinformationen und/oder der Vertrauensinformationen beim Ermitteln, ob das vorbestimmte digitale Zertifikat zulässig ist und/oder beim Ermitteln des Vertrauensniveaus des vorbestimmten digitalen Zertifikats.

Insbesondere werden nicht alle Zulassungsinformationen und/oder der Vertrauensinformationen benutzt, um einer Zulässigkeit des Zertifikats zu ermitteln und/oder um das Vertrauensniveau zu ermitteln. Zum Beispiel kann ein Teil der Zulassungsinformationen und/oder der Vertrauensinformationen deaktiviert werden, wenn ein bestimmter Nutzer die Nutzereinrichtung nutzt und/oder das Zertifikat validieren möchte. Dadurch kann z.B. in Abhängigkeit des Nutzers die ermittelte Zulässigkeit und das ermittelte Vertrauensniveau variieren und eine Flexibilität des Validierens des Zertifikats kann zudem erhöht werden.

Gemäß einem zweiten Aspekt wird eine Validierungseinrichtung zum Validieren eines vorbestimmten digitalen Zertifikats vorgeschlagen. Die Validierungseinrichtung umfasst:
eine Speichereinheit zum Speichern einer Zulassungsinformation und einer Vertrauensinformation, wobei die Zulassungsinformation angibt, welche digitalen Zertifikate aus einer Vielzahl von digitalen Zertifikaten zulässige digitale Zertifikate sind, und wobei die Vertrauensinformation ein Vertrauensniveau der zugelassenen digitalen Zertifikate angibt; und
eine Ermittlungseinheit zum Ermitteln, unter Berücksichtigung der Zulassungsinformation, ob das vorbestimmte digitale Zertifikat zulässig ist, und zum Ermitteln des Vertrauensniveaus des vorbestimmten digitalen Zertifikats unter Berücksichtigung der Vertrauensinformation, falls die Ermittlungseinheit ermittelt hat, dass das vorbestimmte digitale Zertifikat zulässig ist.

Die Speichereinheit und/oder die Ermittlungseinheit können jeweils hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform ist die Validierungseinrichtung geeignet, das Verfahren gemäß dem ersten Aspekt oder gemäß einer Ausführungsform des ersten Aspekts durchzuführen. Die für das vorgeschlagene Verfahren beschriebenen Ausführungsformen und Merkmale gelten für die vorgeschlagene Validierungseinrichtung entsprechend.

Gemäß einem dritten Aspekt wird ein Computerprogrammprodukt vorgeschlagen, welches auf einer programmgesteuerten Einrichtung die Durchführung des Verfahrens gemäß dem ersten Aspekt oder gemäß einer Ausführungsform des ersten Aspekts veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem vierten Aspekt wird ein System zum Validieren eines vorbestimmten digitalen Zertifikats mit einer Validierungseinrichtung gemäß dem zweiten Aspekt oder gemäß einer Ausführungsform des zweiten Aspekts und einer beantragenden Einrichtung, die das Validieren des digitalen Zertifikats beantragt, vorgeschlagen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren werden die zuvor beschriebenen Aspekte anhand von bevorzugten Ausführungsformen unter Bezugnahme auf die beigelegten Figuren näher erläutert.
- Fig. 1: zeigt ein Beispiel eines Systems zum Validieren eines vorbestimmten digitalen Zertifikats;
- Fig. 2: zeigt ein Verfahren zum Validieren eines vorbestimmten digitalen Zertifikats gemäß einer ersten Ausführungsform;
- Fig. 3: zeigt ein Verfahren zum Validieren eines vorbestimmten digitalen Zertifikats gemäß einer zweiten Ausführungsform; und
- Fig. 4: zeigt ein Beispiel einer Zertifikatskette.

In den Figuren sind gleiche oder funktionsgleiche Elemente mit denselben Bezugszeichen versehen worden, sofern nichts anderes angegeben ist.

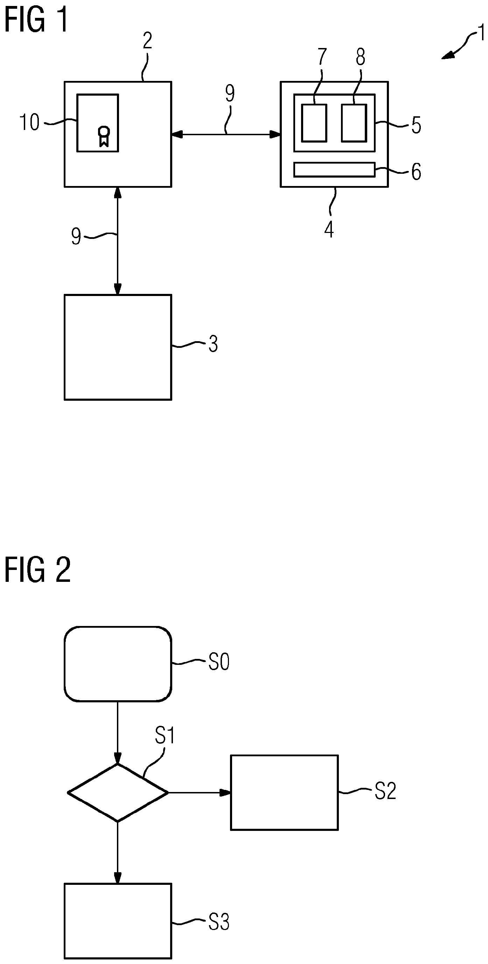

Die Fig. 1 zeigt ein Beispiel eines Systems 1 zum Validieren eines vorbestimmten digitalen Zertifikats 10. Das System 1 ist Teil eines industriellen Netzwerks. Es umfasst eine Nutzereinrichtung 2, eine Einrichtung 3 als Zertifikatsinhaber und eine Validierungseinrichtung 4. Der Zertifikatsinhaber 3 und die Validierungseinrichtung 4 sind jeweils mit Kabeln 9 mit der Nutzereinrichtung 2 kommunikativ gekoppelt.

Der Zertifikatsinhaber 3 ist diejenige Einrichtung, für die das Zertifikat 10 ausgestellt wurde. Das Zertifikat 10 ist also der Einrichtung 3 zugeordnet. Die Einrichtung 3 ist eine Steuereinrichtung des industriellen Netzwerks, die ihre Daten der Nutzereinrichtung 2 zur Verfügung stellt. Die Einrichtung 3 stellt ihr Zertifikat 10 der Nutzereinrichtung 2 bereit, damit diese es z.B. zum Entschlüsseln der Daten nutzen kann. Die Nutzereinrichtung 2 muss das Zertifikat 10 validieren, bevor es benutzt werden kann.

Zum Validieren des Zertifikats 10 kann die Nutzereinrichtung 10 die Validierungseinrichtung 4 nutzen. Diese wird anhand der Fig. 2 beschrieben, welche ein Verfahren zum Validieren eines digitalen Zertifikats 10 gemäß einer ersten Ausführungsform zeigt.

In einem Vorbereitungsschritt S0 wird die Validierungseinrichtung 4, die in der Fig. 1 dargestellt ist, bereitgestellt. Die Validierungseinrichtung 4 umfasst eine Speichereinheit 5, welche z.B. als Dateien auf einer Festplatte ausgeführt ist, sowie eine Ermittlungseinheit 6, welche z.B. als ein Prozessor ausgeführt ist. In der Speichereinheit 5 sind eine Zulassungsinformation 7 und eine Validierungsinformation 8 gespeichert. Die Zulassungsinformation 7 und die Validierungsinformation 8 bilden zusammen eine Mehrzahl von Truststores, mit welchen ein Vertrauensniveau des Zertifikats 10 bestimmt werden kann.

Die Zulassungsinformation 7 umfasst hierzu eine Liste von Zertifizierungsstellen, die als zulässig betrachtete Zertifikate ausstellen. Die Validierungsinformation 8 gibt ferner für jede der zulässigen Zertifizierungsstellen, die als zulässig betrachtete Zertifikate ausstellen, ein Vertrauensniveau an. Es wird hierbei zwischen drei Vertrauensniveaus unterschieden, welche "niedrig", "mittel" und "hoch" sind.

In dem Schritt S0 beauftragt die Nutzereinrichtung 2 die Validierungseinrichtung 4 zudem mit dem Validieren des Zertifikats 10.

In einem Schritt S1 ermittelt die Validierungseinrichtung 4 anhand der Validierungsinformation 7, ob das Zertifikat 10 zulässig ist. Zum Ermitteln der Zulässigkeit des Zertifikats 10 benutzt die Validierungseinrichtung 4 die Ermittlungseinheit 6. Zum Ermitteln der Zulässigkeit des Zertifikats 10 überprüft die Ermittlungseinheit 6, ob das Zertifikat 10 von einer Zertifizierungsstelle ausgestellt wurde, die gemäß der Validierungsinformation 7 eine zulässige Zertifizierungsstelle ist. Falls das Zertifikat 10 tatsächlich von einer Zertifizierungsstelle ausgestellt wurde, die gemäß der Validierungsinformation 7 eine zulässige Zertifizierungsstelle ist, bestimmt die Validierungseinrichtung 4 in dem Schritt S1, dass das Zertifikat 10 zulässig ist.

Falls in dem Schritt S1 bestimmt wird, dass das Zertifikat 10 zulässig ist, wird in einem Schritt S3 unter Berücksichtigung der Vertrauensinformation 8 ein Vertrauensniveau des Zertifikats 10 bestimmt. Zum Ermitteln des Vertrauensniveaus des Zertifikats 10 benutzt die Validierungseinrichtung 4 die Ermittlungseinheit 6. Die Ermittlungseinheit 6 ermittelt das Vertrauensniveau des Zertifikats 10, indem sie auf die Vertrauensinformation 8 zugreift.

Falls das Zertifikat 10 jedoch von einer Zertifizierungsstelle ausgestellt wurde, die gemäß der Validierungsinformation 7 keine zulässige Zertifizierungsstelle ist, bestimmt die Validierungseinrichtung 4 in dem Schritt S1, dass das Zertifikat 10 nicht zulässig ist. In diesem Fall wird in einem Schritt S2 das Validieren des Zertifikats 10 mit negativem Ergebnis abgebrochen.

In Ausführungsformen erzeugt die Ermittlungseinheit 6 anschließend eine Ergebnisinformation, die angibt, ob das Zertifikat 10 in dem Schritt S1 als zulässig erachtet wurde und welches Vertrauensniveau in dem Schritt S3 ermittelt wurde.

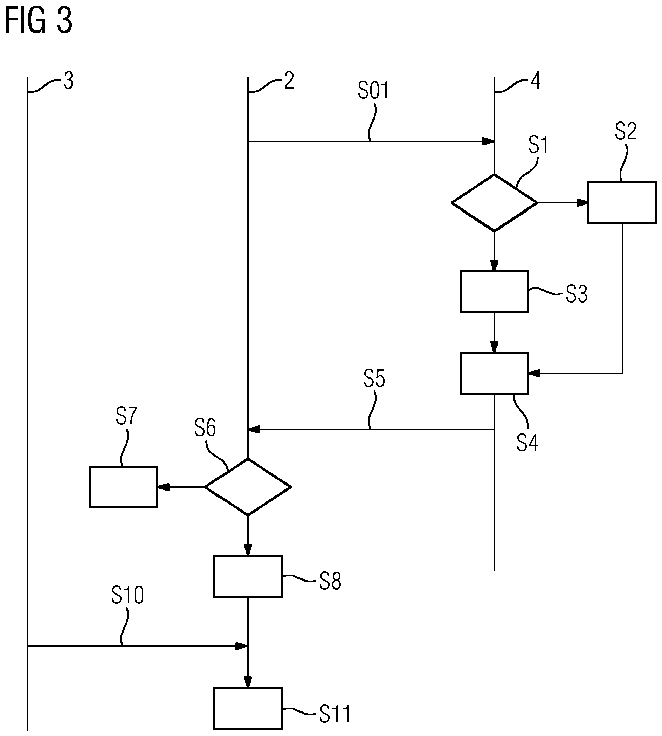

Die Fig. 3 zeigt ein Verfahren zum Validieren eines vorbestimmten digitalen Zertifikats gemäß einer zweiten Ausführungsform. Das Verfahren aus der Fig. 3 kann auch mit dem in Bezug auf die Fig. 1 beschriebenen System 1 durchgeführt werden.

In dem Schritt S01 beauftragt die Nutzereinrichtung 2 die Validierungseinrichtung 4 damit, die Zulässigkeit des Zertifikats 10 und ggf. dessen Vertrauensniveau zu ermitteln. Hierzu überträgt die Nutzereinrichtung 2 über das Kabel 9 eine Anfrage an die Validierungseinrichtung 4. Die Anfrage erhält weitere Information über das Zertifikat 10, z.B. eine Benutzungsinformation. Die Benutzungsinformation gibt die geplante Benutzung des Zertifikats 10 an. Die Benutzungsinformation gibt hier an, dass das Zertifikat 10 zum Validieren von Daten, die von der Einrichtung 3 empfangen werden, benutzt werden soll.

Die Schritte S1 - S3 entsprechen größtenteils den Schritten S1 - S3, die in Bezug auf die Fig. 1 beschrieben wurden, und werden deswegen nicht nochmal beschrieben. Hierbei werden in den Schritten S2 und S3 die Zulässigkeit und das Vertrauensniveau des Zertifikats 10 zusätzlich unter Berücksichtigung der Benutzungsinformation ermittelt.

In einem Schritt S4 erzeugt die Ermittlungseinheit 6 eine Ergebnisinformation. Die Ergebnisinformation gibt an, ob das Zertifikat 10 in dem Schritt S1 als zulässig erachtet wurde und welches Vertrauensniveau in dem Schritt S3 ermittelt wurde.

In einem Schritt S5 wird die Ergebnisinformation über das Kabel 9 an die Nutzereinrichtung 2 übertragen.

In einem Schritt S6 wird durch die Nutzereinrichtung 2 bestimmt, ob das ermittelte Vertrauensniveau über einem vorbestimmten Vertrauensniveau liegt. Das vorbestimmte Vertrauensniveau ist ein Vertrauensniveau, das in der Nutzereinrichtung 2 vorgespeichert ist, und angibt, welche Vertrauensniveaus akzeptabel sind. Hier ist das vorbestimmte Vertrauensniveau "mittel". Falls das in dem Schritt S3 bestimmte Vertrauensniveau "mittel" oder "hoch" ist, wird in dem Schritt S6 bestimmt, dass es über dem vorbestimmten Vertrauensniveau liegt. Falls das in dem Schritt S3 bestimmte Vertrauensniveau jedoch "niedrig" ist, wird in dem Schritt S6 bestimmt, dass es nicht über dem vorbestimmten Vertrauensniveau liegt.

Falls in dem Schritt S6 bestimmt wird, dass das Vertrauensniveau niedriger als das vorbestimmte Vertrauensniveau ist, wird in einem Schritt S7 das Validieren des Zertifikats 10 mit negativem Ergebnis abgebrochen.

Falls in dem Schritt S6 bestimmt wird, dass das Vertrauensniveau über dem vorbestimmten Vertrauensniveau liegt, wird das Zertifikat 10 in einem Schritt S8 positiv validiert. Das validierte Zertifikat 10 wird in der Nutzereinrichtung 2 gespeichert, um von dieser benutzt zu werden.

In einem Schritt S10 empfängt die Nutzereinrichtung 2 Daten von der Einrichtung 3. Die Daten sind mit einem privaten Schlüssel der Einrichtung 3 signiert.

In einem Schritt S11 benutzt die Nutzereinrichtung 2 das validierte Zertifikat 10. Das Zertifikat 10 wird benutzt, um die in dem Schritt S10 empfangenen Daten zu validieren. Hierzu verwendet die Nutzereinrichtung 2 den öffentlichen Schlüssel des digitalen Zertifikats 10 zur Prüfung der Signatur.

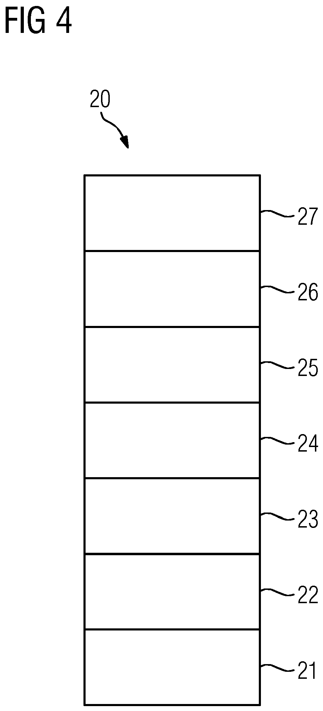

Die Fig. 4 zeigt ein Beispiel einer Zertifikatskette 20. Die Zertifikatskette 20 umfasst ein Wurzelzertifikat 21 und Zwischenzertifikate 22 - 27. Das in Bezug auf die Fig. 1 beschriebene System 1 kann auch eingesetzt werden, um alle Zertifikate 21 - 27 der Zertifikatskette 20 zu validieren. Hierzu können die Verfahren gemäß der ersten Ausführungsform aus der Fig. 2 oder gemäß der zweiten Ausführungsform aus der Fig. 3 durchgeführt werden, wobei statt dem Zertifikat 10 die Zertifikatskette 20 benutzt wird.

In den Schritten S1 und S3 wird für jedes der Zertifikate 21 - 27 der Zertifikatskette 20 einzeln geprüft, ob diese im Hinblick auf die Zulassungsinformation 7, die Vertrauensinformation und ggf. die Benutzungsinformation zulässig sind, und welches Vertrauensniveau jedes Zertifikat 21 - 27 hat. Nur falls bestimmt wird, dass alle Zertifikate 21 - 27 ein ausreichendes Vertrauensniveau haben, werden die Zertifikate 21 - 27 der Zertifikatskette validiert. Die Länge der Zertifikatskette 20 ist veränderbar. Zum Beispiel kann die Zertifikatskette 20 nur die Zertifikate 21 - 23 umfassen.

Obwohl die vorliegende Erfindung anhand von Ausführungsbeispielen beschrieben wurde, ist sie vielfältig modifizierbar. Die Verfahrensschritte können auch in einer anderen Reihenfolge durchgeführt werden, insbesondere können die Schritte S1 und S3 zusammen durchgeführt werden. Die Benutzungen des Zertifikats 10 sind nicht auf die beschriebenen Benutzungen beschränkt. Es ist auch möglich, die Zulassungsinformation 7 und die Vertrauensinformation 8 dynamisch anzupassen, und bei der Prüfung des Zertifikats durch die Ermittlungseinheit 6 in der Validierungseinrichtung 4 die empfangene Benutzungsinformation mit zu berücksichtigen. Die Benutzungsinformation muss der Validierungseinrichtung 4 auch nicht mit dem Antrag auf Validierung geschickt werden. Stattdessen kann die Validierungseinrichtung 4 die Benutzungsinformation auch explizit von der Nutzereinrichtung 2 abfragen oder die Nutzereinrichtung 2 selbst das von der Validierungseinrichtung 4 empfangene Ergebnis mit der geplanten Benutzungsart abgleichen. Zudem kann die Benutzungsinformation auch andere benutzungsspezifische Information umfassen.

## Patentansprüche

1. Verfahren zum Validieren eines vorbestimmten digitalen Zertifikats (10) mit einer Validierungseinrichtung (4), wobei die Validierungseinrichtung (4) eine Zulassungsinformation (7) speichert, die angibt, welche digitalen Zertifikate (10) aus einer Vielzahl von digitalen Zertifikaten (10) zulässige digitale Zertifikate sind, und wobei die Validierungseinrichtung (4) ferner eine Vertrauensinformation (8) speichert, welche ein Vertrauensniveau der zugelassenen digitalen Zertifikate (10) angibt, umfassend:
Ermitteln (S1), unter Berücksichtigung der Zulassungsinformation (7), ob das vorbestimmte digitale Zertifikat (10) zulässig ist; und
falls ermittelt wird, dass das vorbestimmte digitale Zertifikat (10) zulässig ist, Ermitteln (S3) des Vertrauensniveaus des vorbestimmten digitalen Zertifikats (10) unter Berücksichtigung der Vertrauensinformation (8).

2. Verfahren nach Anspruch 1, ferner umfassend:
falls ermittelt wird, dass das Vertrauensniveau des vorbestimmten digitalen Zertifikats (10) über einem vorbestimmten Vertrauensniveau liegt, Validieren (S8) des vorbestimmten digitalen Zertifikats (10).

3. Verfahren nach Anspruch 1 oder 2, ferner umfassend:
Benutzen (S11) des validierten digitalen Zertifikats (10) zum Verifizieren von Daten, die von einer vorbestimmten Einrichtung (3) empfangen werden, zum Verschlüsseln von Daten, die an die vorbestimmte Einrichtung (3) übertragen werden, und/oder zum Überprüfen einer digitalen Signatur der vorbestimmten Einrichtung (3).

4. Verfahren nach einem der Ansprüche 1 bis 3, wobei die Validierungseinrichtung (4) für unterschiedliche Benutzungen eines digitalen Zertifikats (10) unterschiedliche Zulassungsinformationen (7) und/oder unterschiedliche Vertrauensinformationen (8) speichert.

5. Verfahren nach Anspruch 4, umfassend:
Bereitstellen (S01) einer Benutzungsinformation, die eine geplante Benutzung des vorbestimmten digitalen Zertifikats (10) angibt, an die Validierungseinrichtung (4);
Ermitteln (S1), unter Berücksichtigung der für die Benutzungsinformation zutreffenden Zulassungsinformation (7), ob das vorbestimmte digitale Zertifikat (10) zulässig ist;
falls ermittelt wird, dass das vorbestimmte digitale Zertifikat (10) zulässig ist, Ermitteln (S3) des Vertrauensniveaus des vorbestimmten digitalen Zertifikats (10) unter Berücksichtigung der Benutzungsinformation.

6. Verfahren nach Anspruch 4 oder 5, ferner umfassend:
Abfragen der Benutzungsinformation durch die Validierungseinrichtung (4).

7. Verfahren nach einem der Ansprüche 1 bis 6, umfassend:
Bereitstellen (S5) des ermittelten Vertrauensniveaus des vorbestimmten digitalen Zertifikats (10) an eine beantragende Einrichtung (2), die das Validieren des digitalen Zertifikats (10) beantragt, und/oder an einen Nutzer.

8. Verfahren nach einem der Ansprüche 1 bis 7, umfassend:
Erzeugen einer Zertifikatskette (20) mit mehreren vorbestimmten Zertifikaten (21 - 27);
Ermitteln, ob das Vertrauensniveau der jeweiligen vorbestimmten digitalen Zertifikate (21 - 27) über dem vorbestimmten Vertrauensniveau liegt; und
Validieren der gesamten Zertifikatskette (20), falls ermittelt wird, dass das Vertrauensniveau der jeweiligen vorbestimmten digitalen Zertifikate (21 - 27) über dem vorbestimmten Vertrauensniveau liegt.

9. Verfahren nach einem der Ansprüche 1 bis 8, ferner umfassend:
Ändern der Zulassungsinformation (7) und/oder der Vertrauensinformation (8).

10. Verfahren nach Anspruch 9, wobei das Ändern der Zulassungsinformation (7) und/oder der Vertrauensinformation (8) in Abhängigkeit von der aktuellen Anwendungssituation, einer Information über die beantragende Einrichtung (2), einer Information über einen Zertifikatsinhaber (3) und/oder einer Information zu einem Benutzungskontext erfolgt.

11. Verfahren nach einem der Ansprüche 1 bis 10, ferner umfassend:
Deaktivieren eines Teils der Zulassungsinformationen (7) und/oder der Vertrauensinformationen (8) beim Ermitteln (S1), ob das vorbestimmte digitale Zertifikat (10) zulässig ist und/oder beim Ermitteln (S3) des Vertrauensniveaus des vorbestimmten digitalen Zertifikats (10).

12. Validierungseinrichtung (4) zum Validieren eines vorbestimmten digitalen Zertifikats (10), wobei die Validierungseinrichtung (4) umfasst:
eine Speichereinheit (5) zum Speichern einer Zulassungsinformation (7) und einer Vertrauensinformation (8), wobei die Zulassungsinformation (7) angibt, welche digitalen Zertifikate aus einer Vielzahl von digitalen Zertifikaten (10) zulässige digitale Zertifikate sind, und wobei die Vertrauensinformation (8) ein Vertrauensniveau der zugelassenen digitalen Zertifikate angibt; und
eine Ermittlungseinheit (6) zum Ermitteln, unter Berücksichtigung der Zulassungsinformation (7), ob das vorbestimmte digitale Zertifikat (10) zulässig ist, und zum Ermitteln des Vertrauensniveaus des vorbestimmten digitalen Zertifikats (10) unter Berücksichtigung der Vertrauensinformation (8), falls die Ermittlungseinheit (6) ermittelt hat, dass das vorbestimmte digitale Zertifikat (10) zulässig ist.

13. Validierungseinrichtung nach Anspruch 12, welche geeignet ist, das Verfahren nach einem der Ansprüche 1 bis 11 durchzuführen.

14. Computerprogrammprodukt, welches auf einer programmgesteuerten Einrichtung die Durchführung des Verfahrens nach einem der Ansprüche 1 bis 11 veranlasst.

15. System (1) zum Validieren eines vorbestimmten digitalen Zertifikats (10) mit einer Validierungseinrichtung (4) nach Anspruch 12 oder 13 und einer beantragenden Einrichtung (2), die das Validieren des digitalen Zertifikats (10) beantragt.
